# EUROPEAN PATENT SPECIFICATION

(11) **EP 1 116 539 B1**
(45) Date of publication and mention of the grant of the patent: **30.07.2008**
(21) Application number: 01300241.5
(22) Date of filing: 12.01.2001
(51) Int. Cl.: B23D 45/06, B27B 5/18

(54) **Traverse saw**
Quersäge
Scie tranversale

(30) Priority: 13.01.2000 GB 0000775
(43) Date of publication of application: 18.07.2001
(73) Proprietor: Black & Decker Inc., Newark, DE 19711 (US); STROMAB Srl, 42017 Novellara (RE) (IT)
(72) Inventor: Sberveglieri, Umberto, 42017 Novellara(RE) (IT)
(74) Representative: Bell, Ian Stephen

(56) References cited:
- EP-A- 0 715 934
- WO-A-98/56529
- DE-U- 9 102 538
- FR-A- 1 091 467
- GB-A- 2 295 987
- US-A- 551 934

## Description

This invention relates to a traverse saw according to the preamble of claim 1.

Such a saw is known from EP 0715934.

Traverse saws, like table saws in general, comprise a table supported by a frame, and a blade assembly mounted below the table and adapted to carry a saw blade which can protrude through a slot in the table to cut a workpiece located on the table. In the case of a traverse saw, the blade assembly is normally mounted on a horizontal guide arrangement so that it is movable therealong, and includes a shaft that is attached at one end to the blade assembly and, at its other end, has a handle to allow the user to slide the blade assembly along the guide by pulling or pushing the handle. Thus, the operator can place the workpiece on the table and position it against a fence, and then pull the handle of the shaft to draw the blade assembly across the workpiece in order to cut it.

One such traverse saw is described in GB-A-2,295,987. This saw has a blade assembly that is supported on a guide formed by a pair of parallel bars and can be pulled along the bars to slide the saw blade along the table. The parallel bars are supported by a pair of bar supports, one located at each end of the bars, by means of a screw threaded member and can be raised or lowered in accordance with the thickness of the workpiece, by rotating a rod that is attached to the bar supports. However, such forms of traverse saw are relatively wasteful of space in that only that part of the table that is in front of the exposed saw blade can be used to locate the workpiece, while the part of the table that accommodates the blade assembly and saw blade, which can amount to about half of the dimension of the table, must always remain behind the workpiece. In other words, the maximum width of the workpiece that can be cut on the saw will normally be only half the dimension of the table.

According to the present invention there is provided a traverse saw comprising the features of claim 1. Further advantageous embodiments are defined by the dependent claims 2-9.

Thus, in contrast with existing traverse saw arrangements, the operator raises the saw blade into the workpiece in order to cut it, by manipulating the handle by rotating it, and then directly pull or push the handle in order to slide the blade assembly along the guide and across the workpiece. Such manipulation is such that the blade can be both raised to engage the workpiece and then moved across the workpiece without the operator needing to remove his hand from the handle at any stage from starting to raise the blade to completion of drawing the blade across the workpiece. This has the result that the maximum width of the workpiece that can be cut is set not by the part of the table located in front of the blade assembly, but instead by substantially the entire dimension of the table (in the direction of movement of the blade assembly).

The arrangement that is employed to raise the blade is one that requires rotation of the handle, squeezing of the handle or any other simple action by the operator that does not require the operator to release the handle. Preferably the blade assembly can be raised from its lowermost position to its uppermost position by rotation of the handle through not more than 180° of arc, and especially not more than 120° of arc. This may, for example be achieved if the blade assembly includes a carriage that is located on the guide assembly, and a motor for driving the blade which is vertically displaceable with respect to the carriage. The motor may in this case be connected to the shaft by means of a crank so that rotation of the shaft is converted to vertical linear movement of the motor and blade.

Preferably, whatever the blade height adjustment mechanism that is employed, the blade assembly will descend under gravity when the handle is released by the operator so that the saw blade is below the table. In this way the saw can be employed in a mode that is inherently safe since the blade will, in this mode, always become hidden as soon as the operator releases the handle.

Preferably, the blade assembly can be secured at a constant height above its lowermost position in order to enable the saw to be used in an alternative mode of operation, for example as a fixed blade height table saw.

While such a saw will normally be employed to cut the workpiece in a plane perpendicular to the table surface, the saw preferably has a guide arrangement and/or blade assembly that can be rotated, at least to a limited extent about an axis extending parallel to the direction of travel of the blade assembly, to enable the saw to execute bevel cuts in the workpiece. The saw blade will need to descend under gravity when the handle is released in a direction along its own plane, but normally the guide arrangement and/or blade assembly will not need to be rotated by significantly more that 45° of arc in order to form a bevel cut, in which case the blade assembly will still be able to descend under gravity when the handle is released.

One form of traverse saw in accordance with the present invention will now be described by way of example with reference to the accompanying drawings in which:
- Figure 1: is a sectional elevation through a traverse saw in accordance with the present invention taken from one side of the saw;

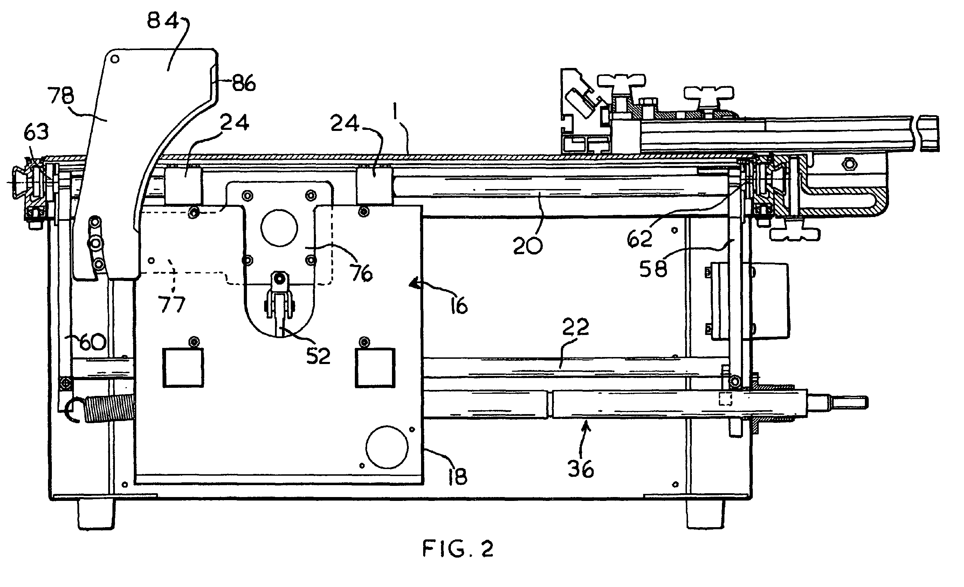

- Figure 2: is a sectional elevation through the saw taken from the opposite side to that of Figure 1;
- Figure 3: is a top plan view of the saw of Figures 1 and 2;
- Figure 4: is a sectional elevation through the saw of Figures 1 to 3 taken along the line IV-IV of Figure 3.
- Figure 5: a to 5 d are schematic side views of part of the saw during operation; and
- Figures 6: a to 6 f are further schematic side views of the saw during operation.

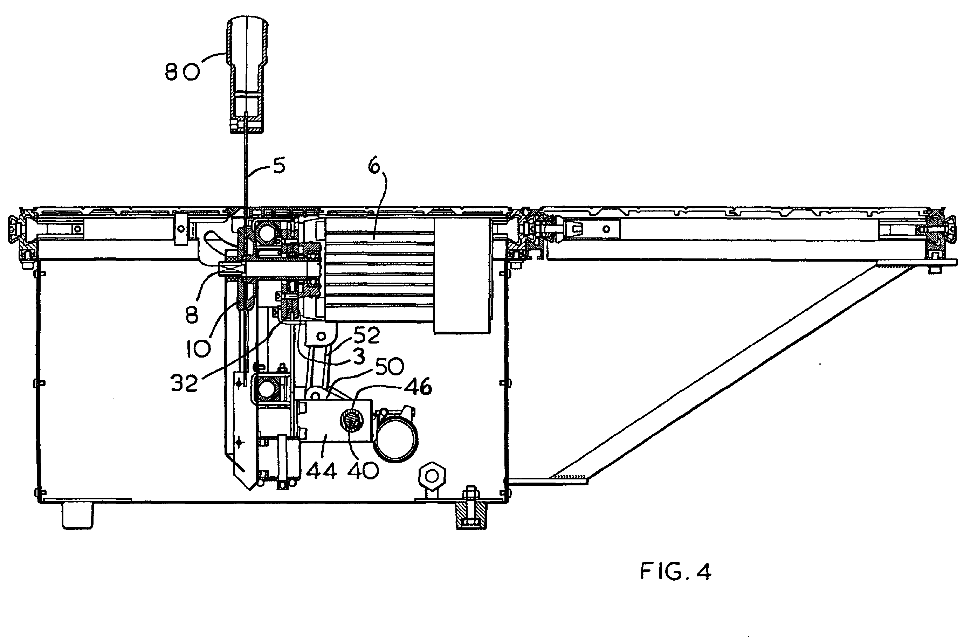

Referring to the accompanying drawings, a traverse saw comprises a table 1 supported by a frame 2, and a blade assembly 4 that is adapted to carry a saw blade 5 (shown in Figure 4). The blade assembly comprises an electric motor 6 having a spindle 8 on which a clamp 10 is located for mounting the saw blade, and a motor control unit 12 which receives electrical power from a power lead 14. The blade assembly 4 is located in a carriage 16 in the form of a generally rectangular plate 18 that is supported on a guide formed by a pair of horizontally extending rods 20 and 22 by means bearings 24 located in the region of each corner of the carriage. The plate 18 has a generally rectangular aperture 26 located in the central region thereof having straight parallel vertical edges 28 and 30. The end of the motor 6 nearest to the saw blade is securely attached to a pair of nylon plates 32 and 34 that are placed together, face to face, on opposite sides of the plate 18 within the aperture 26 to form a mounting guide for the motor. The plates 32 and 34 are rebated along their vertical edges so that, when placed together, a pair of vertical grooves are formed in the resulting mounting guide that receive the vertical edges 28 and 30 of the aperture 26 to hold the mounting guide within the aperture but to allow it to slide vertically with respect to the plate 18.

The saw includes a horizontal shaft 36 that is attached at one end to the carriage 16, and which extends out through the front end of the table frame 2 so that its other end terminates at a handle 38 that can be held by the operator of the saw and pulled in order to cause the carriage 16 to slide in a forward direction along the rods 20 and 22. The shaft 36 is formed by an inner rod 40 and an outer, slightly shorter, sleeve 42 positioned concentrically about the rod. The inner rod 40 of the shaft 36 is attached at its far end (with respect to the operator) to the plate 18 of the carriage 16 by means of a pair of brackets 44 which have aligned holes 46 through which the rod 40 extends and terminates with a washer and nut 48. According to the invention, the rod 40 has a crank 50 extending laterally therefrom preferably between the brackets 44, which is preferably joined to a connecting rod 52, and the connecting rod 52 is itself preferably connected at its other end to the motor 6.

Accordingly, in operation, rotation of the handle 38 by the operator through an angle of approximately 90° will cause the blade arrangement to slide vertically in the aperture 26 of the carriage 16 so that the saw blade emerges through the slot 3 into engagement with a workpiece placed on the table 1. The handle can then be pulled by the operator along the axis of the shaft 36 to cause the blade assembly to slide along the guide rods 20 and 22 toward the operator. As soon as the handle 38 is released, the weight of the motor will cause the blade assembly to slide vertically downward in the carriage 16 until the saw blade is hidden under the table 1. A helical spring 54 is connected between the carriage 16 and a fixed part of the saw assembly so that the blade assembly 4 will be pulled back to its initial position as soon as the operator releases the handle 38.

A knurled ring 56 is located on a screw threaded portion of the rod 40 so that it can be moved along the rod by rotation until it abuts the end of the hollow sleeve 42. Further rotation of the ring 56 will cause the rod 40 to be pulled slightly toward the operator relative to the sleeve 42, and thereby cause the brackets 44 at the other end of the shaft 36 to be squeezed together and grip the crank 50 to prevent vertical movement of the blade assembly. In this manner the height of the blade assembly can be fixed, if desired, to allow the saw to be employed as a traverse saw having a fixed blade position.

The rods 20 and 22 that form the guide for the carriage 16 are connected to one another at each end thereof by means of guide end parts 58 and 60 so that the rods 20 and 22 together with the guide end parts 58 and 60 together form a rigid rectangular guide frame. The upper part of each guide end part, at about the same position as the upper rod 20, is attached to its respective wall of the frame 2 by means of bearings 62 and 63 in such a way that they can pivot about a common horizontal axis, in this case, substantially coincident with the axis of rod 20. The front face 65 (i.e. nearest to the operator) of the table 2 has an arcuate slot centred on the bearing 62 though which the shaft 36 extends in order to enable the guide frame to be moved through an angle of 45° about a horizontal axis between a first position in which the guide frame, carriage plate 18 and saw blade lie in a vertical plane for executing cross-cuts, and a second position in which the guide frame, carriage plate 18 and saw blade lie in a plane at an angle of 45° to the vertical, for executing bevel cuts.

A collar 64 having a peripheral flange 66 is provided on the shaft 36 so that one face of the flange 66 is located against one side of the front wall of the table frame 2. The end portion of the collar 64 located on the external surface of the table frame 2 has a screw thread on which is screwed a hexagonal nut 68. The nut 68 is enclosed in a ring 70 having a corresponding hexagonal bore and a lever 72. The ring 70 may be tightened by means of the lever 72 in order to clamp the front wall of the table frame between the flange 66 and a washer 74 located on the collar 64, and thereby to hold the guide frame, carriage plate 18 and saw blade at any desired bevel angle between 0° (i.e. vertical or cross-cut) and 45° to the vertical. At whatever bevel angle is chosen, the weight of the blade assembly will cause it to slide downwardly (at the same angle to the vertical as the guide frame and carriage plate) until the blade is obscured beneath the table. The knurled ring 56 may, of course, be tightened against the hollow sleeve 42 in order to enable the saw to be used as a fixed height traverse table saw as described above, but this time at a bevel angle.

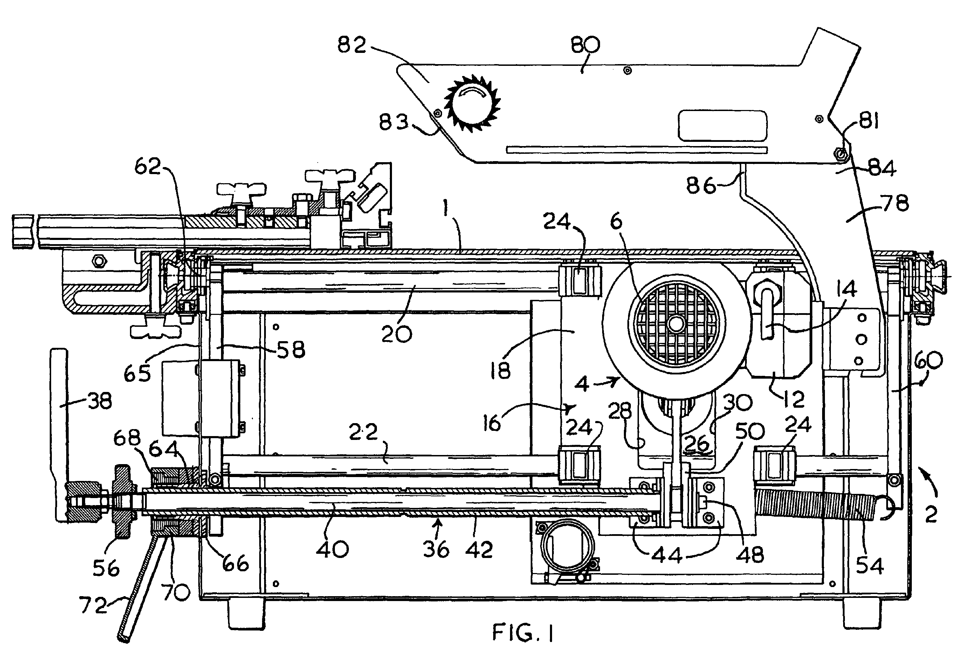

Attached to the two nylon plates that support the motor 6, is a further plate 76 that includes an arm 77 extending rearwardly, i.e. away from the operator, the rearmost part of which is bent so that it is substantially in the plane of the saw blade. A riving knife 78 is bolted so that the riving knife is in the plane of the saw blade. A blade guard 80 formed from steel and having a generally inverted "U" shaped cross-section is pivotally attached to the top of the riving knife at point 81 so that its front end 82 will rest under its weight upon any surface located beneath it (not, as shown in Figure 1), and will protect the operator from accidentally touching the saw blade. Since the riving knife 78 is connected to the motor 6, it will rise and descend with the rest of the blade assembly as it is raised and lowered by the operator, and will always remain in the plane of the saw blade whatever bevel angle the blade assembly is set at. The riving knife has a part 84 that is always located above the table 1, and which has a vertically extending straight edge 86 that is located above the saw blade, the edge 86 acting as a stop against which the workpiece may be butted by the operator before it is cut.

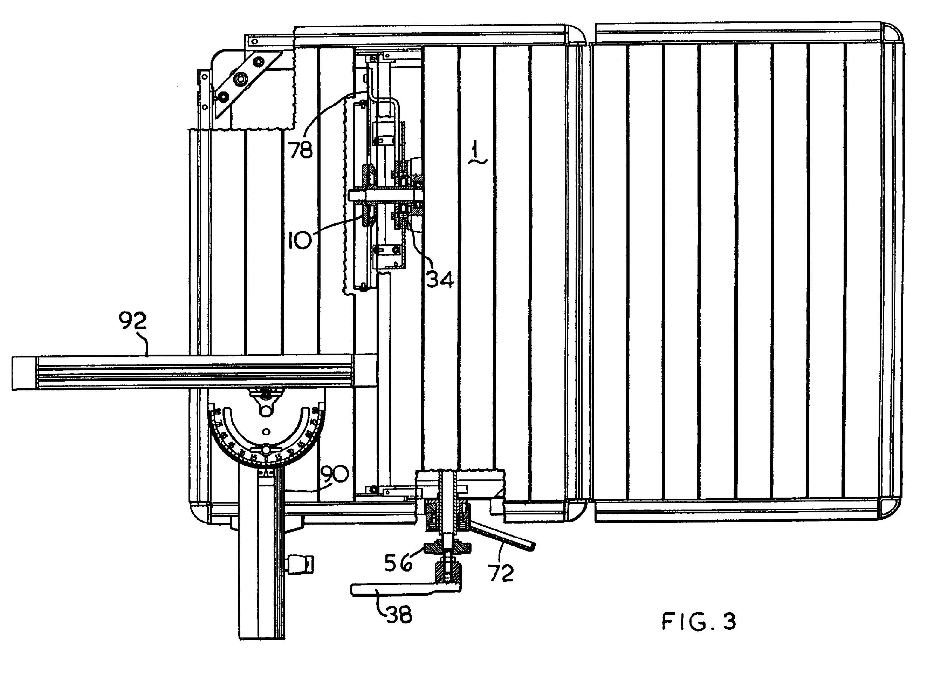

The saw may be provided with a side fence 90 whose distance from the plane of the saw blade may be varied by the operator, and an adjustable fence 92 that may be rotated with respect to the side fence through an angle of 180° of arc. The adjustable fence 92 may thus be employed as shown in Figure 3 as a front fence for cross-cut sawing, or alternatively as a side fence by rotating it clockwise through 90°, or it may be used as a fence for forming mitre cuts in the workpiece. Such fences are well known and will not be described further.

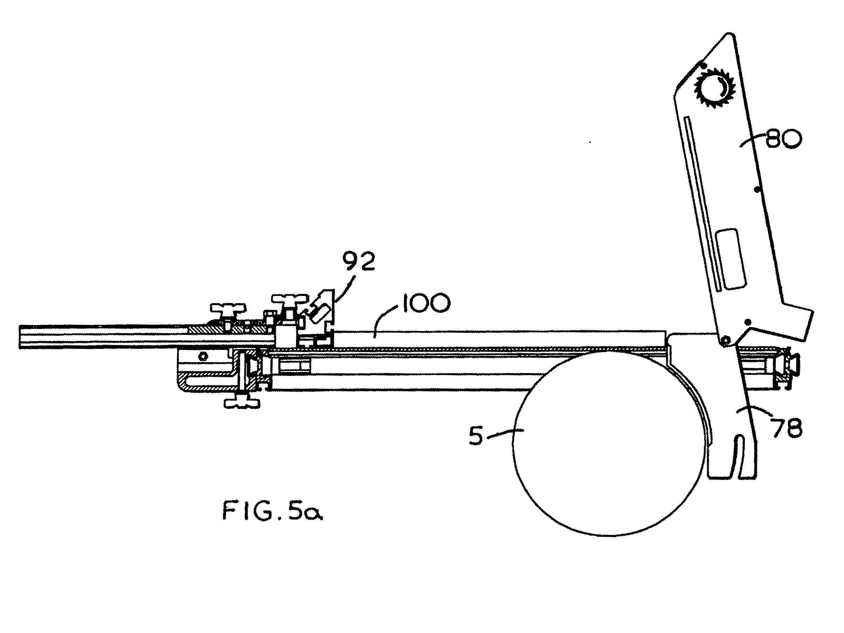

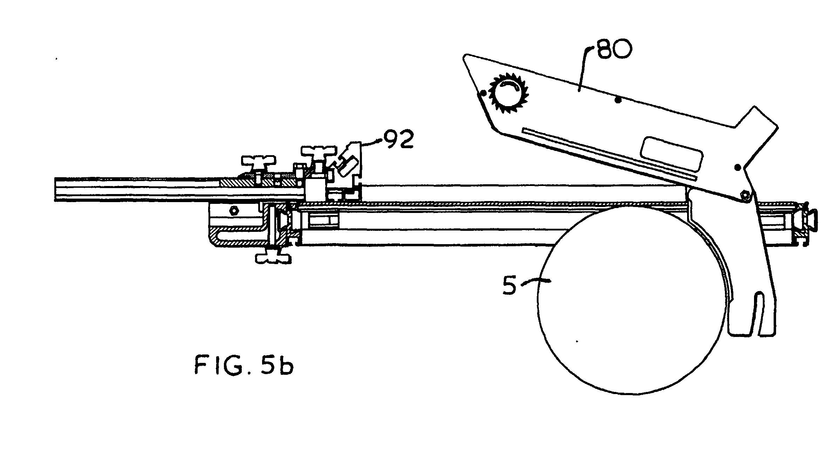

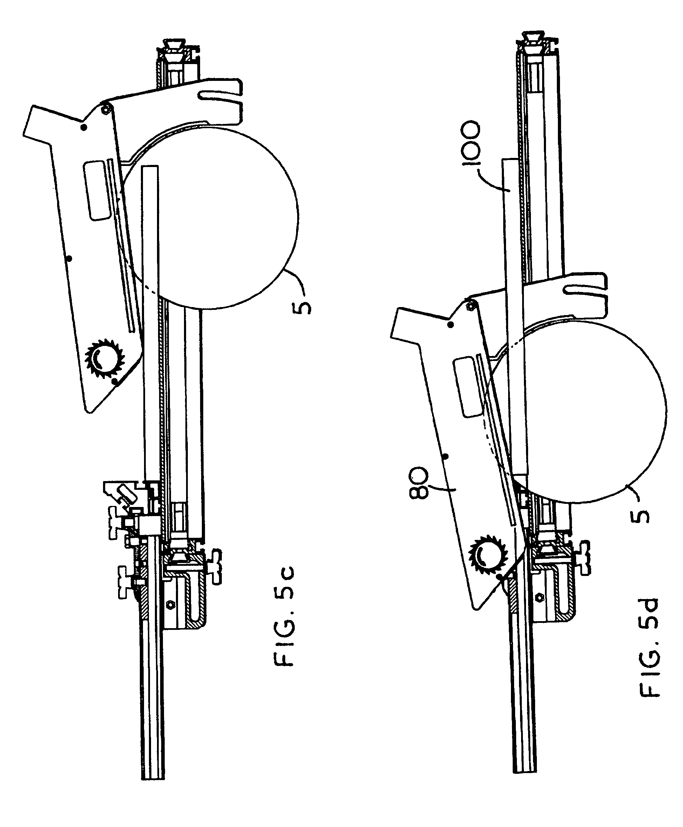

One method of operation of the saw is shown in Figures 5 a to 5 d. In this mode a workpiece 100 of relatively large width is placed on the table 1 so that its front end abuts the fence 92 and its rear end abuts the vertical edge 86 of the riving knife 78 (after the operator has raised the blade guard 80). The blade guard 80 is then lowered onto the workpiece as shown in Figure 5b and the operator then turns handle 38 in order to raise the blade assembly and engage the blade in the workpiece as shown in Figure 5c. Because the blade guard will always pivot about point 81 under its own weight, it will obscure the top of the saw blade 5 as it rises through the workpiece. The operator then pulls the handle 38 towards himself to pull the blade assembly toward the front fence 92 and perform a cross-cut in the workpiece 100.

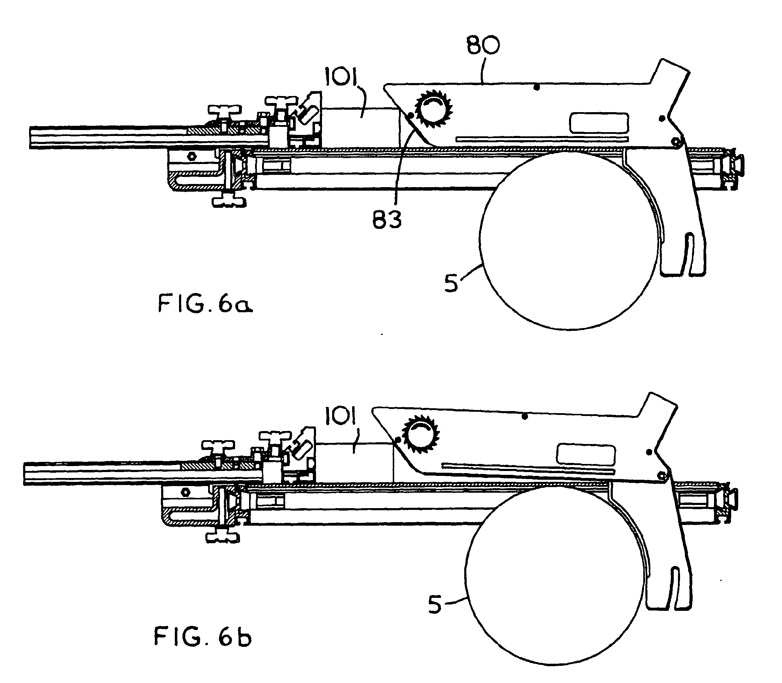

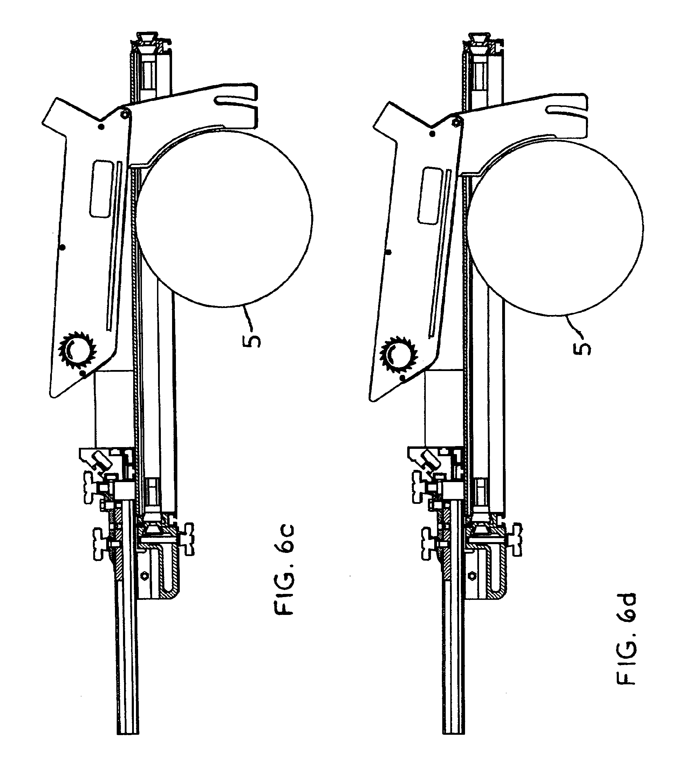

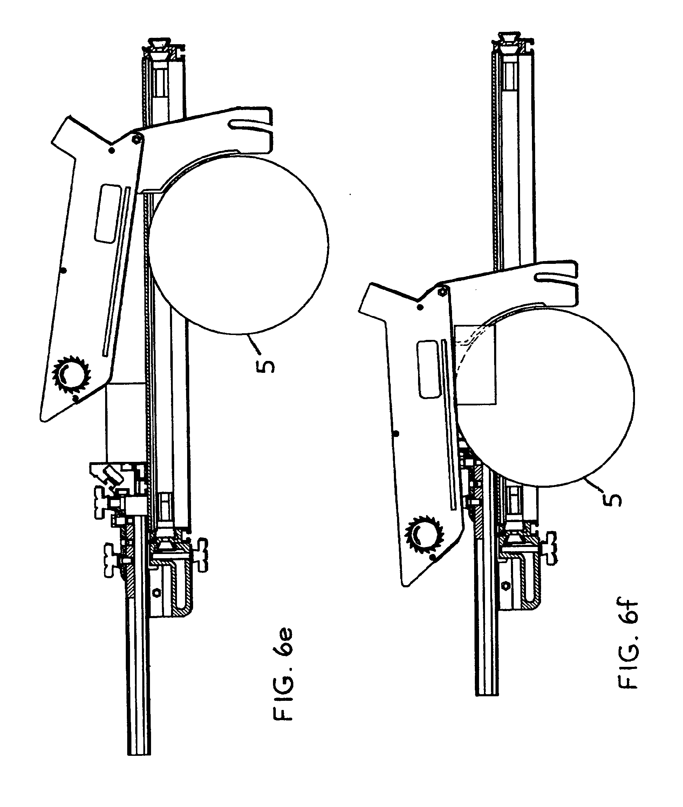

The cutting of a shorter, thicker workpiece 101 is illustrated in Figures 6 a to 6 f. In this case, the blade guard 80 initially rests on the table as the blade assembly is pulled toward the front fence 92 by the operator (Figure 6a). The blade guard has a sloping front edge 83 having an undercut, so that as it touches and bears on the rear side of the workpiece and is pulled toward the front fence 92, it rises up (Figures 6b to d) until it rests on the top surface of the workpiece (Figure 6e). At any time thereafter, the operator may twist the handle 38 in order to raise the blade assembly and execute the cross-cut so that the saw assembly is as shown in Figure 6f. In neither form of operation is the upper edge of the saw blade exposed to the operator.

## Claims

1. A traverse saw which comprises :
a table (1) supported by a frame (2) ; and
a blade assembly (4) mounted below the table and adapted to carry a saw blade (5) which can protrude through a slot (3) in the table to cut a workpiece on the table, the blade assembly (4) being mounted on a horizontal guide arrangement (20,22) so that it is movable therealong, and the saw including a shaft (36) comprising a slideable notatable rod (40) that is attached at one end thereof to the blade assembly and has at the other end thereof a handle (38) to enable a user to move the blade assembly along the guide arrangement by pulling or pushing the handle, **characterised in that** the rod (40) has a crank (50) extending perpendicularly to the longitudinal axis of the rod, wherein the rod is coupled to the blade assembly by means of the crank (50) to enable a user to raise the blade assembly from its lowermost position to its uppermost position and cause the saw blade attached thereto to protrude through the slot to engage a workpiece by rotating the handle and without requiring said user to release grip of the handle at any stage of sliding or rotation of the rod.

2. A saw as claimed in claim 1, wherein the crank (50) is joined to one end of a connecting rod (52), wherein the other end of the connecting rod is joined to the blade assembly to convert rotation of the shaft into vertical linear movement of the blade assembly.

3. A saw as claimed in claim 1 or claim 2, wherein, on release of the handle (38) by the operator, the blade assembly (4) will descend under gravity so that the saw blade (5) is below the table (1).

4. A saw as claimed in any one of claims 1 to 3, wherein the blade assembly (4) can be raised from its lowermost position to its uppermost position by rotation of the handle (38) through not more than 120° of arc.

5. A saw as claimed in any one of claims 1 to 4, wherein the blade assembly (4) includes a carriage (16) that is located on the guide assembly, and a motor (6) for driving the blade (5) which is vertically displaceable with respect to the carriage (16), the motor being connected to the shaft by means of the crank (50).

6. A saw as claimed in any one of claims 1 to 5, wherein blade assembly (4) can be secured at a constant height to enable the saw (5) to be used in an alternative mode of operation.

7. A saw as claimed in any one of claims 1 to 6, wherein the guide arrangement and/or the blade assembly (4) can be rotated, at least to a limited extent, about an axis extending parallel to the direction of travel of the blade assembly (4) to enable the saw (5) to execute bevel cuts in the workpiece.

8. A saw as claimed in any one of claims 1 to 7, wherein the blade assembly (4) includes a riving knife (78) located in the plane of the saw blade (5), the riving knife (78) having a part that extends above the surface of the table (1) when the saw blade (5) is below the table (2), the said part having a vertically extending edge located above the saw blade (5) that can provide a stop against which a workpiece can be butted.

9. A saw as claimed in claim 8, which includes a saw blade guard (80) that is attached at one end to the riving knife (78) so that it can swivel about a horizontal axis and its other end can rest on the table or on a workpiece, if present.

## Patentansprüche

1. Quersäge, umfassend:
einen durch einen Rahmen (2) gehaltenen Tisch (1) und
eine Blattanordnung (4), die unter dem Tisch angebracht und angepasst ist, ein Sägeblatt (5) zu tragen, das durch einen Schlitz (3) in dem Tisch vorstehen kann, um ein Werkstück auf dem Tisch zu schneiden,
wobei die Blattanordnung (4) an einer horizontalen Führungsanordnung (20, 22) angebracht ist, so dass sie daran entlang beweglich ist,
und wobei die Säge eine Welle (36) mit einer verschiebbaren drehbaren Stange (40) umfasst, die an einem Ende davon an der Blattanordnung angebracht ist und an dem anderen Ende davon einen Griff (38) hat, um einem Benutzer zu ermöglichen, die Blattanordnung entlang der Führungsanordnung durch Ziehen oder Drücken des Griffs zu bewegen,
**dadurch gekennzeichnet, dass** die Stange (40) einen Kurbelabschnitt (50) aufweist, der sich senkrecht zu der Längsachse der Stange erstreckt, wobei die Stange mit der Blattanordnung mittels des Kurbelabschnitts (50) verbunden ist, um einem Benutzer zu ermöglichen, die Blattanordnung von ihrer untersten Stellung in ihre oberste Stellung anzuheben und das Sägeblatt, das daran angebracht ist, zu veranlassen, sich durch den Schlitz zu erstrecken, um mit einem Werkstück einzugreifen, indem der Griff rotiert wird, und ohne von dem Benutzer zu erfordern, den Griff zu irgendeinem Zeitpunkt des Schiebens oder Drehens der Stange freizugeben.

2. Säge nach Anspruch 1, wobei der Kurbelabschnitt (50) mit dem einen Ende einer Verbindungsstange (52) verbunden ist, wobei das andere Ende der Verbindungsstange mit der Blattanordnung verbunden ist, um die Drehung der Welle in eine vertikale lineare Bewegung der Blattanordnung umzuwandeln.

3. Säge nach Anspruch 1 oder 2, wobei nach einem Freigeben des Griffs (38) durch den Benutzer die Blattanordnung (42) unter der Schwerkraft heruntersinkt, so dass das Sägeblatt (5) unter dem Tisch (1) ist.

4. Säge nach einem der Ansprüche 1 bis 3, wobei die Blattanordnung (4) aus ihrer untersten Stellung in ihre oberste Stellung durch Drehung des Griffs (38) über nicht mehr als 120° angehoben werden kann.

5. Säge nach einem der Ansprüche 1 bis 4, wobei die Blattanordnung (4) einen Träger (16) umfasst, der an der Führungsanordnung angeordnet ist, und einen Motor (6) zum Antreiben des Blatts (5), das vertikal in Bezug auf den Träger (16) verlagerbar ist, wobei der Motor mit der Welle mittels des Kurbelabschnitts (50) verbunden ist.

6. Säge nach einem der Ansprüche 1 bis 5, wobei die Blattanordnung (4) in einer konstanten Höhe befestigt werden kann, um der Säge (5) zu ermöglichen, in einer alternativen Betriebsart benutzt zu werden.

7. Säge nach einem der Ansprüche 1 bis 6, wobei die Führungsanordnung und/oder die Blattanordnung (4), zumindest in einem begrenzten Ausmaß, um eine Achse, die sich parallel zu der Bewegungsrichtung der Blattanordnung (4) erstreckt, gedreht werden können, um der Säge (5) zu ermöglichen, Gehrungsschnitte in dem Werkstück auszuführen.

8. Säge nach einem der Ansprüche 1 bis 7, wobei die Blattanordnung (4) ein Spaltmesser (78) umfasst, das in der Ebene des Sägeblatts (5) angeordnet ist, wobei das Spaltmesser (78) einen Teil aufweist, der über die Fläche messer (78) einen Teil aufweist, der über die Fläche des Tischs (1) vorsteht, wenn das Sägeblatt (5) unter dem Tisch (1) ist, wobei das Teil eine sich vertikal erstreckende Kante aufweist, die über dem Sägeblatt (5) angeordnet ist, die einen Anschlag bereitstellen kann, gegen den ein Werkstück angelegt werden kann.

9. Säge nach Anspruch 8, die eine Sägeblattschutzhaube (80) umfasst, die an einem Ende des Spaltmessers (78) angebracht ist, so dass sie um eine horizontale Achse schwenken kann, und dessen anderes Ende auf dem Tisch oder auf einem Werkstück, sofern vorhanden, aufliegen kann.

## Revendications

1. Scie transversale comprenant :
une table (1) supportée par un châssis (2) ; et
un ensemble de lame (4) monté au-dessous de la table et adapté pour supporter une lame de scie (5) qui peut faire saillie à travers une fente (3) dans la table pour couper une pièce sur la table,
l'ensemble de lame (4) étant monté sur un agencement de guidage horizontal (20, 22) de sorte qu'il est mobile le long de celui-ci,
et la scie comprenant un arbre (36) comprenant une tige rotative coulissante (40) qui est fixée au niveau de son extrémité sur l'ensemble de lame et a, au niveau de son autre extrémité, une poignée (38) pour permettre à un utilisateur de déplacer l'ensemble de lame le long de l'agencement de guidage en tirant ou en poussant la poignée,
**caractérisée en ce que** la tige (40) a une manivelle (50) s'étendant de manière perpendiculaire à l'axe longitudinal de la tige, dans lequel la tige est couplée à l'ensemble de lame au moyen de la manivelle (50) pour permettre à un utilisateur de faire monter l'ensemble de lame de sa position la plus basse à sa position la plus haute et amener la lame de scie fixée à celui-ci à faire saillie à travers le fente pour mettre en prise une pièce en faisant tourner la poignée et sans nécessiter que ledit utilisateur relâche la préhension de la poignée à n'importe quel stade du coulissement ou de la rotation de la tige.

2. Scie selon la revendication 1, dans laquelle la manivelle (50) est assemblée à une extrémité d'une tige de raccordement (52), dans laquelle l'autre extrémité de la tige de raccordement est assemblée à l'ensemble de lame pour transformer la rotation de l'arbre en mouvement linéaire vertical de l'ensemble de lame.

3. Scie selon la revendication 1 ou 2, dans laquelle, suite au relâchement de la poignée (38) par l'opérateur, l'ensemble de lame (4) descend sous l'action de la gravité de sorte que la lame de scie (5) est sous la table (1).

4. Scie selon l'une quelconque des revendications 1 à 3, dans laquelle l'ensemble de lame (4) peut être levé de sa position la plus basse à sa position la plus haute en faisant tourner la poignée (38) selon une valeur non supérieure à 120° de l'arc.

5. Scie selon l'une quelconque des revendications 1 à 4, dans laquelle l'ensemble de lame (4) comprend un chariot (16) qui est situé sur l'ensemble de guidage, et un moteur (6) pour entraîner la lame (5) qui est verticalement déplaçable par rapport au chariot (16), le moteur étant raccordé à l'arbre au moyen de la manivelle (50).

6. Scie selon l'une quelconque des revendications 1 à 5, dans laquelle l'ensemble de lame (4) peut être fixé à une hauteur constante pour permettre à la scie (5) d'être utilisée dans un mode de fonctionnement en variante.

7. Scie selon l'une quelconque des revendications 1 à 6, dans laquelle l'agencement de guidage et/ou l'ensemble de scie (4) peut être entraîné en rotation, au moins sur une étendue limitée, autour d'un axe s'étendant parallèlement à la direction de déplacement de l'ensemble de lame (4) pour permettre à la scie (5) d'effectuer des coupes en biseau dans la pièce.

8. Scie selon l'une quelconque des revendications 1 à 7, dans laquelle l'ensemble de lame (4) comprend un couteau fendeur (78) situé dans le plan de la lame de scie (5), le couteau fendeur (78) ayant une partie qui s'étend au-dessus de la surface de la table (1) lorsque la lame de scie (5) est sous la table (1), ladite partie ayant un bord s'étendant verticalement situé au-dessous de la lame de scie (5) qui peut fournir une butée contre laquelle une pièce peut venir en butée.

9. Scie selon la revendication 8, qui comprend une protection de lame de scie (80) qui est fixée au niveau d'une extrémité au couteau fendeur (78), de sorte qu'elle peut pivoter autour d'un axe horizontal et que son autre extrémité peut reposer sur la table ou sur une pièce, s'il y en a une.
